# EUROPÄISCHE PATENTSCHRIFT

(11) **EP 3 048 353 B1**
(45) Veröffentlichungstag und Bekanntmachung des Hinweises auf die Patenterteilung: **26.12.2018**
(21) Anmeldenummer: 15152574.8
(22) Anmeldetag: 26.01.2015
(51) Int. Cl.: F16L 21/00, F16L 21/06, F16L 55/172

(54) **Rohrkupplung zum Verbinden zweier Rohrenden beziehungsweise Rohrschelle zum Abdichten eines defekten Rohres**
Pipe coupling for connecting two pipe ends or pipe clamps for sealing a defective pipe
Accouplement tubulaire destiné à relier deux extrémités de tube ou collier destiné à étanchéifier un tube défectueux

(43) Veröffentlichungstag der Anmeldung: 27.07.2016
(73) Patentinhaber: Straub Werke AG, 7323 Wangs (CH)
(72) Erfinder: Mannhart, Hubert, 7320 Sargans (CH); Sudar, Damir, 7310 Bad Ragaz (CH)
(74) Vertreter: Patentbüro Paul Rosenich AG

(56) Entgegenhaltungen:
- EP-A1- 0 551 582
- DE-C1- 4 411 062
- DE-T2- 69 715 400

## Beschreibung

Die Erfindung betrifft eine Rohrkupplung beziehungsweise eine Rohrschelle nach dem Oberbegriff des Anspruchs 1 beziehungsweise des Anspruchs 8.

Rohrkupplungen dienen dem Verbinden zweier einander zugewandten Rohrenden. Eine derartige Rohrkupplung wird auch als Rohrschelle oder Spannschelle bezeichnet.

Um eine gebrauchstaugliche Verbindung der Rohre miteinander zu gewährleisten, muss eine ausreichende Verspannung der Rohrkupplung erfolgen.

Wird eine Rohrkupplung als Rohrschelle zum Abdichten eines defekten Rohres verwendet, wird diese um den defekten Rohrabschnitt gelegt und verspannt. Auch hier muss zur Gewährleistung einer genügenden Abdichtung eine ausreichende Verspannung der Rohrkupplung erfolgen.

Um die auftretenden Druckkräfte, welche aufgrund teils hoher Innendrücke in den Rohren bzw. Rohrleitungen vorhanden sind, zu übernehmen, sind sehr hohe Spannkräfte auf die Rohrkupplung beziehungsweise auf die Rohrschelle aufzubringen. Dies erfordert eine entsprechend massive Ausbildung des Schellenbandes der Rohrkupplung.

Um die Dichtigkeit der geschaffenen Verbindung weiter zu verbessern, werden beispielsweise innenseitig der Rohrkupplung beziehungsweise der Rohrschelle Dichteinlagen vorgesehen, welche den oder die betreffenden mittels des verspannten Schellenbandes in der gewünschten Position gehalten werden. Diese Dichteinlagen können ein Bestandteil der Rohrkupplung sein. Für eine gebrauchstaugliche Dichtigkeit ist eine gleichmässige Verspannung vorteilhaft.

Aus der WO 92/02752 A1 ist eine Rohrkupplung zum Verbinden zweier Rohrenden bekannt, die ein äusseres Schellenband, das einen Aussenlängsschlitz mit einander gegenüberliegenden Aussenlängsschlitzseiten aufweist, ein inneres Schellenband, das einen Innenlängsschlitz mit einander gegenüberliegenden Innenlängsschlitzseiten aufweist, und einen an dem äusseren Schellenband angeordneten Spannmechanismus zur Reduktion des Innendurchmessers der Schellenbänder umfasst. Der Innenlängsschlitz ist gegenüberliegend zu dem Aussenlängsschlitz angeordnet. Innenseitig des inneren Schellenbandes ist eine Dichteinlage vorgesehen.

Aus der DE69715400T2 ist eine weitere Rohrkupplung zum Verbinden zweier Rohrenden bekannt, die ein äusseres Schellenband, ein inneres Schellenband und einen an dem äusseren Schellenband angeordneten Spannmechanismus zur Reduktion des Innendurchmessers der Schellenbänder umfasst. Zwischen dem äusseren Schellenband und dem inneren Schellenband ist eine Schicht aus feuerbeständigem wärmeisolierendem Material angeordnet. Auch bei dieser Rohrkupplung ist der Innenlängsschlitz gegenüberliegend zu dem Aussenlängsschlitz angeordnet. Innenseitig des inneren Schellenbandes ist eine Dichteinlage vorgesehen.

Nachteilig an diesen bekannten Lösungen ist, dass beim Betätigen des Spannmechanismus die freien Kanten beziehungsweise die einander gegenüberliegenden Innenlängsschlitzseiten mit der Dichteinlage verkanten können und somit eine ungleichmässige Verspannungen auftreten kann.

In der EP0551582A1 ist eine Rohrkupplung gezeigt, die als äusseres Schellenband einen der Länge nach gespaltenen, zylindrischen einteiligen Gehäusemantel mit einwärts gebogenen radialen Endwänden aufweist. Ein den Gehäusespalt des Gehäusemantels überbrückendes flaches Einlageblech liegt an der Innenseite des Gehäusemantels an. Das endliche Einlageblech ist bezüglich dem Gehäusespalt derart ausgerichtet, dass sein Längsspalt dem Gehäusespalt diametral gegenüberliegt. Zudem ist innenseitig des Einlageblechs ein V-förmiger Stützring zur seitlichen Stützung der manschettenartigen und innenseitig angeordneten Dichteinlage vorgesehen.

Aus der DE4411062C1 ist eine Axialzugentlastungsschelle bekannt, die ein zweiteiliges äusseres Schellenband (Verbindungselement) mit zwei Spannmechanismen und ein einteiliges inneres Schellenband mit einem eigenen Spannmechnaismus aufweist. Der Spannmechanismus des inneren Schellenbandes ist radial versetzt zu den Spannmechanismen des äusseren Schellenbandes angeordnet.

Aufgabe der vorliegenden Erfindung ist es somit, eine Rohrkupplung beziehungsweise eine Rohrschelle zu schaffen, die die vorgenannten Nachteile nicht aufweist und insbesondere eine vorteilhaftere Verspannung der Rohrkupplung ermöglicht.

Die Aufgabe wird durch die Merkmale des unabhängigen Anspruchs 1 gelöst. Vorteilhafte Weiterbildungen sind in den Figuren und in den jeweils abhängigen Patentansprüchen dargelegt.

Gemäss der Erfindung umfasst eine Rohrkupplung beziehungsweise eine Rohrschelle zum Verbinden zweier Rohrenden beziehungsweise eine Rohrschelle zum Abdichten eines defekten Rohres ein äusseres Schellenband, das zumindest einen Aussenlängsschlitz mit einander gegenüberliegenden Aussenlängsschlitzseiten aufweist, ein inneres Schellenband, das zumindest einen Innenlängsschlitz mit einander gegenüberliegenden Innenlängsschlitzseiten aufweist, und zumindest einen am äusseren Schellenband angeordneten Spannmechanismus zur Reduktion des Innendurchmessers der Schellenbänder. Das äussere Schellenband ist zumindest zweiteilig ausgebildet, wobei zwischen den Enden der zumindest zwei äusseren Schellenbandteile jeweils ein Aussenlängsschlitz ausgebildet ist. Das innere Schellenband ist zumindest zweiteilig ausgebildet, wobei zwischen den Enden der zumindest zwei inneren Schellenbandteile jeweils ein Innenlängsschlitz ausgebildet ist, wobei zumindest einer der Innenlängsschlitze versetzt zu einem der Aussenlängsschlitze angeordnet ist. Ein innerer Schellbandteil weist eine grössere Bogenlänge als der aussenliegende äussere Schellenbandteil auf, so dass dieser innere Schellbandteil zumindest einseitig über den diesem zugeordneten, äusseren Schellenbandteil hinausragt und den entsprechenden Aussenlängsschlitz im zusammengeführten Zustand der Rohrkupplung beziehungsweise der Rohrschelle abdeckt. Besonders bevorzugt überragt ein innerer Schellenteil den diesem zugeordneten, aussenliegenden äusseren Schellenteil beidseitig.

Bei dieser Lösung sind durch diese Ausgestaltung der Rohrkupplung beziehungsweise Rohrschelle die beim Verspannen des Spannmechanismus auftretenden radialen Komponenten der Schraubenkräfte in einem sehr steifen System gefangen und vorteilhaft abgeleitet. Im Bereich des Überbrückungselements ist eine dreilagige Verstärkung vorhanden, welche die Übernahme von hohen Kraftkomponenten ohne eine Verformung des entsprechenden Abschnitts der Rohrkupplung beziehungsweise Rohrschelle ermöglicht.

Die einzelnen Schellenbandteile können gegenüber einer herkömmlichen Rohrkupplung beziehungsweise Rohrschelle bei gleicher Belastbarkeit weniger massiv ausgebildet werden. Des Weiteren können unterschiedliche Materialien für die einzelnen Schellenbandteile verwendet werden, die entsprechend des jeweiligen Anwendungsfalls kombiniert werden. Damit lassen sich Rohrkupplung beziehungsweise Rohrschelle kostengünstiger herstellen.

Des Weiteren ist mit einer solchen Rohrkupplung beziehungsweise Rohrschelle die Montage wesentlich vereinfacht, was insbesondere bei engen Platzverhältnissen, z. B. in einem Graben, vorteilhaft ist. Durch die mehrteilige Ausgestaltung zentriert sich Rohrkupplung beziehungsweise der Rohrschelle bei der Montage fast selbstständig, was die Montage zusätzlich vereinfacht.

Vorzugsweise ist jeder Innenlängsschlitz versetzt zu den Aussenlängsschlitzen angeordnet, womit die vorgenannten Vorteile beim Verspannen wie auch bei der Montage zusätzlich verbessert werden.

Vorzugsweise ist zumindest einer der inneren Schellenbandteile an einem äusseren Schellenbandteil festgelegt, so dass beim Montieren der Rohrkupplung beziehungsweise der Rohrschelle dieser innere Schellenbandteil nicht verloren gehen kann und so die Rohrkupplung beziehungsweise die Rohrschelle einfach montierbar ist. Besonders vorteilhaft ist jeder innere Schellenbandteil an dem diesen zugeordneten, aussenliegenden äusseren Schellenbandteil festgelegt. Der oder die inneren Schellenteile sind vorteilhaft form- und/oder kraftschlüssig an dem oder den äusseren Schellenteilen festgelegt, beispielsweise mittels zumindest einen Schweisspunkt, zumindest einen Lötpunkt, zumindest einen Niet, zumindest einer Schraube, zumindest einen Clinchpunkt, oder eines Klebers. Die Art der Festlegung wird entsprechend der Materialart der zu verbindenden Elemente gewählt.

Bevorzugt ist zumindest ein separates, flächiges Überbrückungselement zur Überbrückung der Innenlängsschlitze an dem inneren Schellenband vorgesehen, das sich über die Innenlängsschlitze erstreckt. Damit ist ein Verkanten weder des inneren Schellenbandes noch des äusseren Schellenbandes verhindert.

Bei Rohren aus einem weichen, unter Last verformbaren Material oder mit einer entsprechenden Rohraussenseite wird beim Verspannen der erfindungsgemässen Rohrkupplung beziehungsweise Rohrschelle ein Verkanten der Innenlängsschlitzseiten mit der Rohraussenseite verhindert.

Ist eine Dichteinlage vorgesehen, wird beim Verspannvorgang ein Einklemmen der Dichteinlage zwischen den einander gegenüberliegenden Innenlängsschlitzseiten ausgeschlossen, was eine dichte Verbindung der zu verbindenden Rohre gewährleistet.

Durch diese Ausgestaltung der Rohrkupplung beziehungsweise Rohrschelle sind die beim Verspannen des Spannmechanismus auftretenden radialen Komponenten der Schraubenkräfte in einem sehr steifen System gefangen und vorteilhaft abgeleitet. Im Bereich des flächigen Überbrückungselements ist eine dreilagige Verstärkung vorhanden, welche die Übernahme von hohen Kraftkomponenten ohne eine Verformung des entsprechenden Abschnitts der Rohrkupplung beziehungsweise Rohrschelle ermöglicht.

Das flächige Überbrückungselement weist vorteilhaft eine Erstreckung auf, welche zur Abdeckung der Innenlängsschlitze auch im unverspannten Zustand der Rohrkupplung beziehungsweise der Rohrschelle ausreicht.

In einer Variante dazu ist vorzugsweise für jeden Innenlängsschlitz jeweils ein separates, flächiges Überbrückungselement zur Überbrückung desselben vorgesehen, was eine einfache und kostengünstige Herstellung der Rohrkupplung beziehungsweise der Rohrschelle ermöglicht, wobei eine gute Verspannbarkeit der Rohrkupplung beziehungsweise der Rohrschelle weiterhin gegeben ist.

Bevorzugt sind zwei separate, flächige Überbrückungselemente an Endbereichen eines inneren Schellenteils vorgesehen, was eine einfache Herstellung der Rohrkupplung beziehungsweise der Rohrschelle ermöglicht.

In einem alternativen, nicht erfindungsgemässen Ansatz umfasst eine Rohrkupplung beziehungsweise eine Rohrschelle ein äusseres Schellenband, das zumindest einen Aussenlängsschlitz mit einander gegenüberliegenden Aussenlängsschlitzseiten aufweist, ein inneres Schellenband, das zumindest einen Innenlängsschlitz mit einander gegenüberliegenden Innenlängsschlitzseiten aufweist, und zumindest einen am äusseren Schellenband angeordneten Spannmechanismus zur Reduktion des Innendurchmessers der Schellenbänder, wobei der zumindest eine Innenlängsschlitz versetzt zu dem zumindest einen Aussenlängsschlitz angeordnet ist. Weiter ist ein separates, flächiges Überbrückungselement zur Überbrückung des zumindest einen Innenlängsschlitzes an dem inneren Schellenband vorgesehen, das sich von der einen Innenlängsschlitzseite in Richtung der anderen Innenlängsschlitzseite erstreckt.

Der Begriff "..längs.." im Zusammenhang mit dem Aussenlängsschlitz und Innenlängsschlitz bezieht sich auf die Rohrlängsachse des Rohres oder der Rohre an denen die Rohrkupplung beziehungsweise die Rohrschelle angeordnet wird. Mit anderen Worten verläuft der Aussenlängsschlitz und auch der Innenlängsschlitz quer zur dem bogenförmigen Verlauf des Schellenbandes.

Eine solche Rohrkupplung beziehungsweise Rohrschelle zeichnet sich durch eine gleichmässige Verspannbarkeit aus, wobei ein Verkanten weder des inneren Schellenbandes noch des äusseren Schellenbandes erfolgen kann.

Durch diese Ausgestaltung der Rohrkupplung beziehungsweise Rohrschelle sind die beim Verspannen des Spannmechanismus auftretenden radialen Komponenten der Schraubenkräfte in einem sehr steifen System gefangen und vorteilhaft abgeleitet. Im Bereich des flächigen Überbrückungselements ist eine dreilagige Verstärkung vorhanden, welche die Übernahme von hohen Kraftkomponenten ohne eine Verformung des entsprechenden Abschnitts der Rohrkupplung beziehungsweise Rohrschelle ermöglicht.

Bei Rohren aus einem weichen, unter Last verformbaren Material oder mit einer entsprechenden Rohraussenseite wird mit dieser Rohrkupplung beziehungsweise Rohrschelle ein Verkanten der Innenlängsschlitzseiten mit der Rohraussenseite verhindert.

Ist eine Dichteinlage vorgesehen, wird mit dieser Rohrkupplung beziehungsweise Rohrschelle beim Verspannvorgang ein Einklemmen der Dichteinlage zwischen den einander gegenüberliegenden Innenlängsschlitzseiten weitgehend ausgeschlossen, was eine dichte Verbindung der zu verbindenden Rohre gewährleistet. Zudem wird eine gleichmässige Anpressung der Dichteinlage entlang des gesamten Umfangs des entsprechenden Rohrabschnitts sichergestellt.

Diese Rohrkupplung beziehungsweise Rohrschelle ist dabei einfach herstellbar und montagefreundlich.

Das zumindest eine flächige Überbrückungselement weist vorteilhaft eine Erstreckung auf, welche zur Abdeckung des zumindest einen Innenlängsschlitz auch im unverspannten Zustand der Rohrkupplung beziehungsweise der Rohrschelle ausreicht.

Vorteilhaft ist das zumindest eine flächige Überbrückungselement einseitig an dem inneren Schellenband festgelegt, so dass beim Montieren der Rohrkupplung beziehungsweise der Rohrschelle das flächige Überbrückungselement nicht verloren gehen kann und so die Rohrkupplung beziehungsweise die Rohrschelle einfach montierbar ist. Das flächige Überbrückungselement ist vorteilhaft form- und/oder kraftschlüssig an einem Abschnittsbereich des inneren Schellenbandes festgelegt, beispielsweise mittels zumindest einen Schweisspunkt, zumindest einen Lötpunkt, zumindest einen Niet, zumindest einer Schraube, zumindest einen Clinchpunkt, oder eines Klebers. Die Art der Festlegung wird entsprechend der Materialart der zu verbindenden Elemente gewählt.

Vorteilhaft ist das innere Schellenband an dem äusseren Schellenband festgelegt, womit die Rohrkupplung beziehungsweise die Rohrschelle besonders einfach montierbar ist. Der innere Schellenteil ist vorteilhaft form- und/oder kraftschlüssig an dem äusseren Schellenteil festgelegt, beispielsweise mittels zumindest einen Schweisspunkt, zumindest einen Lötpunkt, zumindest einen Niet, zumindest einer Schraube, zumindest einen Clinchpunkt, oder eines Klebers. Die Art der Festlegung wird entsprechend der Materialart der zu verbindenden Elemente gewählt.

Alternativ ist das innere Schellenband zumindest zweiteilig ausgebildet, womit die Rohrkupplung beziehungsweise die Rohrschelle aufgrund der daraus resultierenden Flexibilität noch einfacher einfach montierbar ist. Besonders vorteilhaft ist jeder innere Schellenbandteil an dem äusseren Schellenband festgelegt. Die inneren Schellenteile sind vorteilhaft form- und/oder kraftschlüssig an dem oder - sofern mehrere äussere Schellenteile vorhanden sind - an den äusseren Schellenteilen festgelegt, beispielsweise mittels zumindest einen Schweisspunkt, zumindest einen Lötpunkt, zumindest einen Niet, zumindest einer Schraube, zumindest einen Clinchpunkt, oder eines Klebers. Die Art der Festlegung wird entsprechend der Materialart der zu verbindenden Elemente gewählt.

Vorteilhaft ist für jeden Innenlängsschlitz jeweils ein separates, flächiges Überbrückungselement zur Überbrückung desselben vorgesehen, womit beim Verspannvorgang ein Einklemmen der Dichteinlage bei jedem Innenlängsschlitz ausgeschlossen ist. Jedes flächige Überbrückungselement weist vorteilhaft eine Erstreckung auf, welche zur Abdeckung des jeweiligen Innenlängsschlitz auch im unverspannten Zustand der Rohrkupplung beziehungsweise der Rohrschelle ausreicht.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine Ausführungsform einer Rohrkupplung beziehungsweise Rohrschelle gemäss einem zweiten, nicht erfinderischen Ansatz in einer perspektivischen Ansicht,
- Fig. 2: einen Schnitt durch den Innenschlitz der Ausführungsform gemäss der Fig. 1,
- Fig. 3: eine Ausführungsform einer Rohrkupplung beziehungsweise Rohrschelle gemäss der Erfindung in einer perspektivischen Ansicht,
- Fig. 4: einen ersten äusseren Schellenteil der Ausführungsform gemäss Fig. 3 mit einem angeordneten ersten inneren Schellenteil in einer perspektivischen Ansicht,
- Fig. 5: einen zweiten äusseren Schellenteil der Ausführungsform gemäss Fig. 3 mit angeordneten zweiten inneren Schellenteil in einer perspektivischen Ansicht, und
- Fig. 6: eine perspektivische Detailansicht der Ausführungsform gemäss Fig. 3.

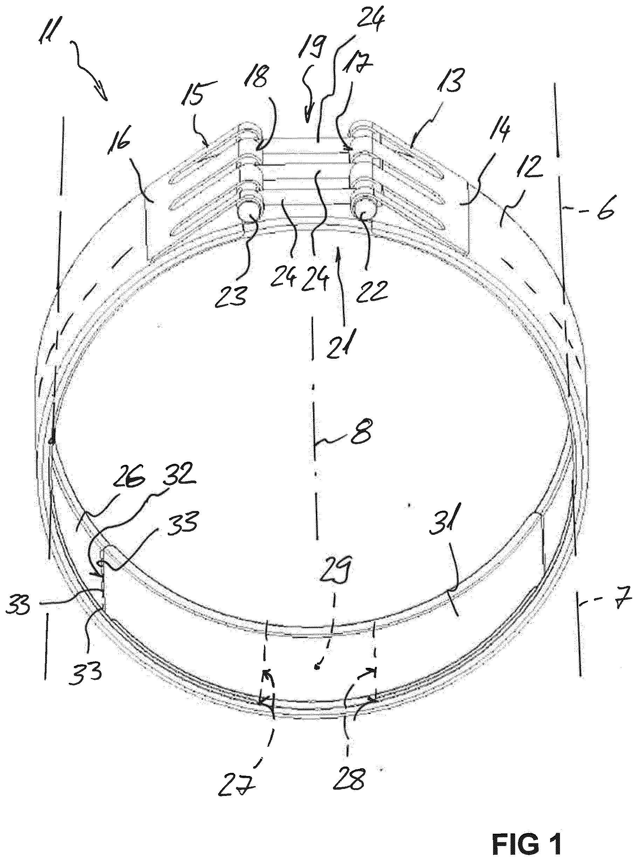

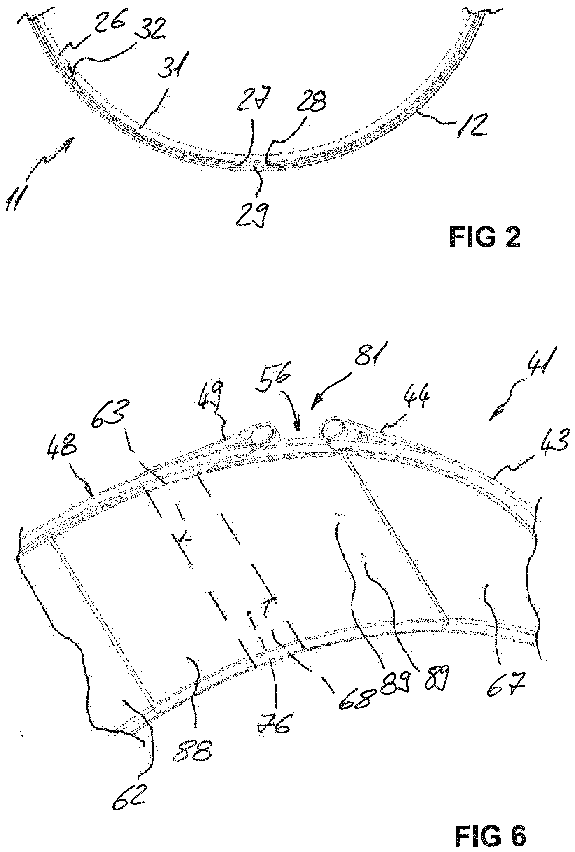

In den Figuren 1 und 2 ist eine nicht erfindungsgemässe Rohrkupplung 11 zum Verbinden zweier Rohrenden der Rohre 6 und 7 dargestellt. Die Rohre 6 und 7 definieren eine Rohrlängsachse 8. Die Rohrkupplung 11 kann auch als eine Rohrschelle zum Abdichten eines defekten Rohres dienen.

Die Rohrkupplung 11 weist ein äusseres Schellenband 12 auf, dessen freie Endbereiche jeweils zu Laschen 13 bzw. 15 umgeformt und deren Enden 14 bzw. 16 aussenseitig an dem äusseren Schellenband 12 festgelegt sind. Die einander gegenüberliegenden Laschen 13 und 15 weisen einander gegenüberliegenden Aussenlängsschlitzseiten 17 und 18 auf, zwischen denen ein Aussenlängsschlitz 19 ausgebildet ist. Der Aussenlängsschlitz 19 erstreckt sich parallel zu der Rohrlängsachse 8.

Die Rohrkupplung 11 weist weiter ein inneres Schellenband 26 mit einander gegenüberliegenden Innenlängsschlitzseiten 27 und 28 auf, zwischen denen ein Innenlängsschlitz 29 ausgebildet ist. Der Innenlängsschlitz 29 ist versetzt zu dem Aussenlängsschlitz 19 angeordnet, in diesem Beispiel um 180° versetzt. Der Innenlängsschlitz 29 erstreckt sich parallel zu der Rohrlängsachse 8. Das innere Schellenband 26 ist an dem äusseren Schellenband 12 festgelegt. Das innere Schellenband 26 wird beispielsweise durch zumindest einen Schweisspunkt an dem äusseren Schellenband 12 festgelegt.

In den Laschen 13 und 15 des äusseren Schellenbandes 12 ist jeweils ein Spannbolzen 22 und 23 vorgesehen, die von Spannschrauben 24 durchdrungen sind, wobei zumindest in einem der Spannbolzen 22 oder 23 ein Innengewindeabschnitt vorgesehen ist, in welchem ein Aussengewindeabschnitt der Spannschrauben 24 eingreifen kann. Die Spannbolzen 22 und 23 und die Spannschrauben 24 bilden zusammen den am äusseren Schellenband angeordneten Spannmechanismus 21 zur Reduktion des Innendurchmessers der Schellenbänder 12 und 26.

Weiter ist an dem inneren Schellenband 26 ein separates, flächiges Überbrückungselement 31 zur Überbrückung des Innenlängsschlitzes 29 vorgesehen. Das flächige Überbrückungselement 31 erstreckt sich von der einen Innenlängsschlitzseite 27 in Richtung der anderen Innenlängsschlitzseite 28 und jeweils darüber hinaus. Das flächige Überbrückungselement 31 ist einseitig, hier beim Überbrückungselementende 32, beispielsweise mit mehreren Schweisspunkten 33 an dem inneren Schellenband 26 an dessen Innenseite festgelegt.

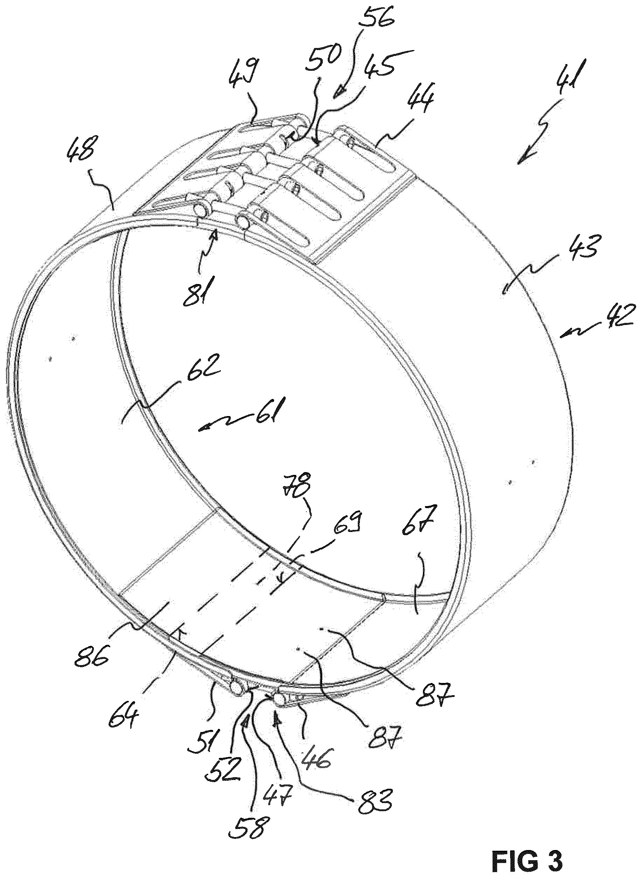

Die in den Figuren 3 bis 6 gezeigte erfindungsgemässe Rohrkupplung 41 ist das äussere Schellenband 42 zweiteilig ausgebildet und weist somit ein äusseres Schellenbandteil 43 und 48 auf. Die freien Endbereiche des äusseren Schellenbandteils 43 sind jeweils zu Laschen 44 bzw. 46 umgeformt, wobei deren Enden aussenseitig an dem äusseren Schellenbandteil 43 festgelegt sind, z. B. über Schweisspunkte oder Nieten oder Schrauben. Die freie Endbereiche des äusseren Schellenbandteils 48 sind ebenfalls jeweils zu Laschen 49 bzw. 51 umgeformt, wobei deren Enden aussenseitig an dem äusseren Schellenbandteil 48 festgelegt sind, z. B. über Schweisspunkte oder Nieten oder Schrauben.

Die einander gegenüberliegenden Laschen 44 und 49 weisen einander gegenüberliegenden Aussenlängsschlitzseiten 45 und 50 auf, zwischen denen der Aussenlängsschlitz 56 ausgebildet ist.

Die einander gegenüberliegenden Laschen 46 und 51 weisen einander gegenüberliegenden Aussenlängsschlitzseiten 47 und 52 auf, zwischen denen der Aussenlängsschlitz 58 ausgebildet ist.

Das innere Schellenband 61 der Rohrkupplung 41 ist zweiteilig ausgebildet und weist somit einen inneren Schellenteil 62 und einen inneren Schellenteil 67 auf.

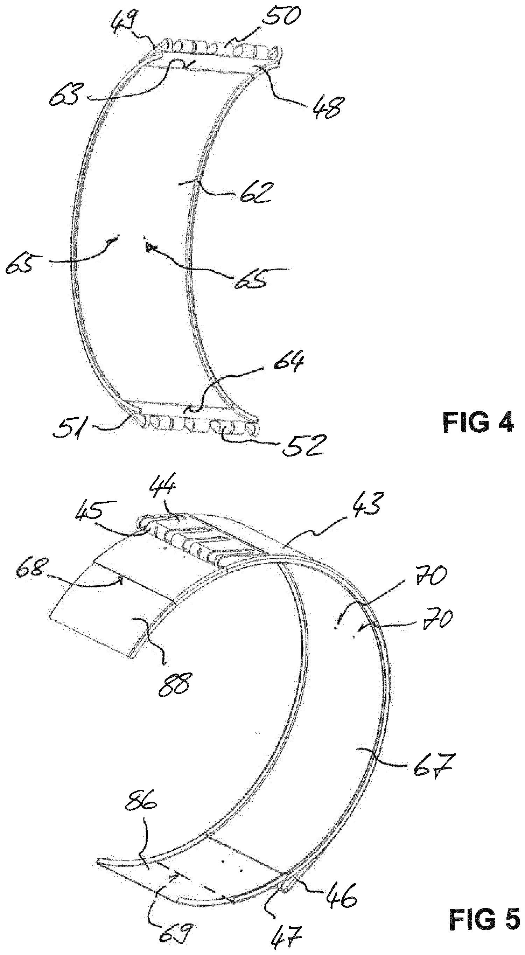

Der innere Schellenteil 62 ist an dem äusseren Schellenteil 48 festgelegt, z. B. über zwei Schweisspunkte 65 (siehe Fig. 4). Der innere Schellenteil 62 weist weiter eine durch Innenlängsschlitzseiten 63 und 64 begrenzte Bogenlänge auf, die kürzer als die Bogenlänge des äusseren Schellenteils 48 ist. Im vorliegenden Beispiel sind die Innenlängsschlitzseiten 63 und 64 des inneren Schellenteils 62 etwa gleich weit von den Aussenlängsschlitzseiten 50 und 52 des äusseren Schellenteils 48 beabstandet.

Der innere Schellenteil 67 ist an dem äusseren Schellenteil 43 festgelegt, z. B. über zwei Schweisspunkte 70 (siehe Fig. 5). Der innere Schellenteil 67 weist weiter eine durch Innenlängsschlitzseiten 68 und 69 begrenzte Bogenlänge auf, die länger als die Bogenlänge des äusseren Schellenteils 43 ist. Im vorliegenden Beispiel überragen die Innenlängsschlitzseiten 68 und 69 des inneren Schellenteils 67 etwa gleich weit die Aussenlängsschlitzseiten 45 und 47 des äusseren Schellenteils 43.

Im zusammengesetzten Zustand der Rohrkupplung 41 (siehe Figuren 3 und 6) ist zwischen den einander gegenüberliegenden Innenlängsschlitzseiten 63 und 68 ein Innenlängsschlitz 76 ausgebildet. Zwischen den einander gegenüberliegenden Innenlängsschlitzseiten 64 und 69 ein Innenlängsschlitz 78 ausgebildet. Der Innenlängsschlitz 76 ist versetzt zu dem Aussenlängsschlitz 56 und der Innenlängsschlitz 78 ist versetzt zu dem Aussenlängsschlitz 58 angeordnet.

Beim Aussenlängsschlitz 56 ist ein erster Spannmechanismus 81 und beim Aussenlängsschlitz 58 ist ein zweiter Spannmechanismus 83 zur Reduktion des Innendurchmessers der Rohrkupplung 41 vorgesehen. Anstelle von zwei Spannmechanismen wäre es auch denkbar, nur einen derselben vorzusehen und den anderen lediglich als Gelenkverbindung auszubilden.

An den freien Endbereichen des inneren Schellenteils 67 ist jeweils innenseitig ein separates, flächiges Überbrückungselement 86 und 88 vorgesehen, die sich im zusammengesetzten wie im verspannten Zustand der Rohrkupplung 41 über die Innenlängsschlitze 76 bzw. 78 erstrecken. Die flächigen Überbrückungselemente 86 und 88 sind jeweils form- und/oder kraftschlüssig an dem inneren Schellenteil 67 festgelegt, hier mittels Schweisspunkte 87 bzw. 89. Alternativ können die flächigen Überbrückungselement 86 und 88 auch mit Nieten oder Schrauben an dem Schellenteil 67 festgelegt sein.

**Bezugszeichenliste**

| | | | |
|---|---|---|---|
| 6 | Rohr | 47 | Aussenlängsschlitzseite |
| 7 | Rohr | 48 | äusserer Schellenbandteil |
| 8 | Rohrlängsachse | 49 | Lasche v. 48 |
| | | 50 | Aussenlängsschlitzseite |
| | | 51 | Lasche v. 48 |
| 11 | Rohrkupplung | 52 | Aussenlängsschlitzseite |
| 12 | äusseres Schellenband | | |
| 13 | Lasche | 56 | Aussenlängsschlitz |
| 14 | Ende | 58 | Aussenlängsschlitz |
| 15 | Lasche | | |
| 16 | Ende | 61 | inneres Schellenband |
| 17 | Aussenlängsschlitzseite | 62 | innerer Schellenbandteil |
| 18 | Aussenlängsschlitzseite | 63 | Innenlängsschlitzseite |
| 19 | Aussenlängsschlitz | 64 | Innenlängsschlitzseite |
| | | 65 | Schweisspunkt |
| 21 | Spannmechanismus | | |
| 22 | Bolzen | 67 | innerer Schellenbandteil |
| 23 | Bolzen | 68 | Innenlängsschlitzseite |
| 24 | Spannschraube | 69 | Innenlängsschlitzseite |
| | | 70 | Schweisspunkt |
| 26 | inneres Schellenband | | |
| 27 | Innenlängsschlitzseite | 76 | Innenlängsschlitz |
| 28 | Innenlängsschlitzseite | 78 | Innenlängsschlitz |
| 29 | Innenlängsschlitz | | |
| | | 81 | Spannmechanismus |
| 31 | Überbrückungselement | 83 | Spannmechanismus |
| 32 | Überbrückungselementende | | |
| 33 | Schweisspunkt | 86 | Überbrückungselement |
| | | 87 | Schweisspunkt |
| | | 88 | Überbrückungselement |
| 41 | Rohrkupplung | 89 | Schweisspunkt |
| 42 | äusseres Schellenband | | |
| 43 | äusserer Schellenbandteil | | |
| 44 | Lasche v. 43 | | |
| 45 | Aussenlängsschlitzseite | | |
| 46 | Lasche v. 43 | | |

## Patentansprüche

1. Rohrkupplung zum Verbinden zweier Rohrenden beziehungsweise eine Rohrschelle zum Abdichten eines defekten Rohres umfassend ein äusseres Schellenband (42), das zumindest einen Aussenlängsschlitz (56, 58) mit einander gegenüberliegenden Aussenlängsschlitzseiten (45, 50; 47, 51) aufweist, ein inneres Schellenband (61), das zumindest einen Innenlängsschlitz (76, 78) mit einander gegenüberliegenden Innenlängsschlitzseiten (63, 68; 64, 69) aufweist, und zumindest einen Spannmechanismus (81, 83) zur Reduktion des Innendurchmessers der Schellenbänder (42, 61), wobei das äussere Schellenband (42) zumindest zweiteilig ausgebildet ist, wobei zwischen den Enden der zumindest zwei äusseren Schellenbandteile (43, 48) jeweils ein Aussenlängsschlitz (56, 58) ausgebildet ist, wobei das innere Schellenband (61) zumindest zweiteilig ausgebildet ist, wobei zwischen den Enden der zumindest zwei inneren Schellenbandteile (62, 67) jeweils ein Innenlängsschlitz (76, 78) ausgebildet ist, wobei zumindest einer der Innenlängsschlitze (76, 78) versetzt zu einem der Aussenlängsschlitze (56, 58) angeordnet ist, **dadurch gekennzeichnet, dass** einer der zumindest zwei inneren Schellenbandteile (67) eine grössere Bogenlänge als einer der zumindest zwei aussenliegenden äusseren Schellenbandteile (43) aufweist.

2. Rohrkupplung beziehungsweise Rohrschelle nach Anspruch 1, **dadurch gekennzeichnet, dass** der innere Schellenbandteil (67) mit der grösseren Bogenlänge als der aussenliegende äussere Schellenbandteil (43) den äusseren Schellenbandteil (43) beidseitig überragt.

3. Rohrkupplung beziehungsweise Rohrschelle nach Anspruch 1 oder 2, **dadurch gekennzeichnet, dass** zumindest einer und vorteilhaft jeder innere Schellenbandteil (62, 67) an einem äusseren Schellenbandteil (43, 48) festgelegt ist.

4. Rohrkupplung beziehungsweise Rohrschelle nach einem der Ansprüche 1 bis 3, **dadurch gekennzeichnet, dass** zumindest ein separates Überbrückungselement zur Überbrückung der Innenlängsschlitze (76, 78) an dem inneren Schellenband vorgesehen ist, das sich über die Innenlängsschlitze (76, 78) erstreckt.

5. Rohrkupplung beziehungsweise Rohrschelle nach einem der Ansprüche 1 bis 4, **dadurch gekennzeichnet, dass** für jeden Innenlängsschlitz (76, 78) jeweils ein separates Überbrückungselement (86, 88) zur Überbrückung desselben vorgesehen ist.

6. Rohrkupplung beziehungsweise Rohrschelle nach Anspruch 5, **dadurch gekennzeichnet, dass** zwei separate Überbrückungselemente (86, 88) an Endbereichen eines inneren Schellenteils (67) vorgesehen sind.

## Claims

1. A pipe coupling for connecting two pipe ends or a pipe clip for sealing a defective pipe, comprising an outer clip band (42), which has at least one outer longitudinal slit (56, 58) with mutually opposing outer longitudinal slit sides (45, 50; 47, 51), an inner clip band (61), which has at least one inner longitudinal slit (76, 78) with mutually opposing inner longitudinal slit sides (63, 68; 64, 69), and at least one clamping mechanism (81, 83) for reducing the inner diameter of the clip bands (42, 61), wherein the outer clip band (42) has at least a two-part design, wherein a respective outer longitudinal slit (56, 58) is formed between the ends of the at least two outer clip band parts (43, 48), wherein the inner clip band (61) has at least a two-part design, wherein a respective inner longitudinal slit (76, 78) is formed between the ends of the at least two inner clip band parts (62, 67), wherein at least one of the inner longitudinal slits (76, 78) is offset relative to one of the outer longitudinal slits (56, 58), **characterized in that** one of the at least two inner clip band parts (67) has a larger arc length than one of the at least two outlying outer clip band parts (43) .

2. The pipe coupling or pipe clip according to claim 1, **characterized in that** the inner clip band part (67) with the arc length larger than the outlying outer clip band part (43) projects over the outer clip band part (43) on both sides.

3. The pipe coupling or pipe clip according to claim 1 or 2, **characterized in that** at least one and advantageously each inner clip band part (62, 67) is fixed on an outer clip band part (43, 48).

4. The pipe coupling or pipe clip according to one of claims 1 to 3, **characterized in that** at least one separate bridging element is provided on the inner clip band for bridging the inner longitudinal slits (76, 78), which extends over the inner longitudinal slit (76, 78).

5. The pipe coupling or pipe clip according to one of claims 1 to 4, **characterized in that** a separate bridging element (86, 88) is provided for each inner longitudinal slit (76, 78) for bridging the latter.

6. The pipe coupling or pipe clip according to claim 5, **characterized in that** two separate bridging elements (86, 88) are provided at end areas of an inner clip part (67).

## Revendications

1. Raccord de tuyauterie, destiné à assembler deux extrémités de tubes, respectivement un collier de serrage pour assurer l'étanchéité d'un tube défectueux, comprenant une bande de collier (42) extérieure, qui comporte au moins une fente longitudinale extérieure (56, 58) pourvue de faces de fente longitudinale extérieure (45, 50 ; 47, 51) en vis-à-vis, une bande de collier (61) intérieure, qui comporte au moins une fente longitudinale intérieure (76, 78), pourvue de faces de fente longitudinale intérieure (63, 68 ; 64, 69) et au moins un mécanisme de serrage (81, 83) pour la réduction du diamètre intérieur des bandes de collier (42, 61), la bande de collier (42) extérieure étant conçue au moins en deux parties, entre les extrémités des au moins deux parties de bande de collier extérieure (43, 48) étant conçue chaque fois une fente longitudinale extérieure (56, 58), la bande de collier (61) intérieure étant conçue au moins en deux parties, entre les extrémités des au moins deux parties de bande de collier intérieure (62, 67) étant conçue chaque fois une fente longitudinale intérieure (76, 78), au moins l'une des fentes longitudinales intérieures (76, 78) étant placée en décalage par rapport à l'une des fentes longitudinales extérieures (56, 58), **caractérisé en ce que** l'une (67) des au moins deux parties de bande de collier intérieure présente une longueur d'arc supérieure à celle de l'une (43) des au moins deux parties de bande de collier extérieure externes.

2. Raccord de tuyauterie, respectivement collier de serrage selon la revendication 1, **caractérisé en ce que** la partie de bande de collier intérieure (67) présentant la longueur d'arc plus grande que la partie de bande de collier extérieure (43) saillit de part et d'autre au-delà de la partie de bande de collier extérieure (43).

3. Raccord de tuyauterie, respectivement collier de serrage selon la revendication 1 ou 2, **caractérisé en ce qu'**au moins une et de préférence chaque partie de bande de collier intérieure (62, 67) est immobilisée sur une partie de bande de collier extérieure (43, 48) .

4. Raccord de tuyauterie, respectivement collier de serrage selon l'une quelconque des revendications 1 à 3, **caractérisé en ce qu'**au moins un élément de chevauchement séparé, destiné à chevaucher les fentes longitudinales intérieures (76, 78) est prévu sur la bande de collier intérieure, qui s'étend par-dessus les fentes longitudinales intérieures (76, 78).

5. Raccord de tuyauterie, respectivement collier de serrage selon l'une quelconque des revendications 1 à 4, **caractérisé en ce que** pour chaque fente longitudinale intérieure (76, 78) est prévu chaque fois un élément de chevauchement (86, 88) séparé, destiné à chevaucher celle-ci.

6. Raccord de tuyauterie, respectivement collier de serrage selon la revendication 5, **caractérisé en ce que** deux éléments de chevauchement (86, 88) séparés sont prévus sur des zones d'extrémité d'une partie intérieure de collier (67).
